(19) Europäisches Patentamt
European Patent Office
Office européen des brevets

(11) **EP 2 860 722 A1**

(12) **EUROPEAN PATENT APPLICATION**
published in accordance with Art. 153(4) EPC

(43) Date of publication:
**15.04.2015 Bulletin 2015/16**

(51) Int Cl.:
*G09G 3/36* (2006.01)      *G09G 3/18* (2006.01)

(21) Application number: **12870335.2**

(22) Date of filing: **07.12.2012**

(86) International application number:
**PCT/CN2012/086193**

(87) International publication number:
**WO 2013/181907 (12.12.2013 Gazette 2013/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2012 CN 201210187110**

(71) Applicant: **Shanghai Tianma Micro-electronics Co., Ltd.**
**Pudong New District**
**Shanghai 201201 (CN)**

(72) Inventors:
• **LI, Hong**
**Shanghai 201201 (CN)**
• **YOU, Shuai**
**Shanghai 201201 (CN)**

(74) Representative: **Maiwald Patentanwalts GmbH**
**Elisenhof**
**Elisenstrasse 3**
**80335 München (DE)**

(54) **ACTIVE MATRIX DISPLAY PANEL DRIVING METHOD AND APPARATUS, AND DISPLAY**

(57) A method and apparatus for driving an active matrix display panel, and a display are provided. The method includes: turning on the scanning lines sequentially; and adjusting common voltages applied to common electrodes arranged opposite to the pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage. According to the technical solution, only the common voltages applied to the common electrodes are adjusted, to counteract the influence of feed-through voltages on pixel voltages and compensate voltage changes of pixel electrodes generated when the scanning lines correspondingly coupled to the pixel electrodes turn form an on state to an off state, without changing the structure of the active matrix display panel. Therefore, the complexity of the manufacturing process is reduced, and the production yield is improved.

```
┌─────────────────────────────────────────────────────┐
│       turn on the scanning lines sequentially        │──── S1
└─────────────────────────────────────────────────────┘
                          │
┌─────────────────────────────────────────────────────┐
│ adjust common voltages applied to the common          │
│ electrodes arranged opposite to the pixel electrodes   │──── S2
│ according to differences in voltage change among the   │
│ pixel electrodes correspondingly coupled to            │
│ different scanning lines generated when the scanning   │
│ lines turn from an on state to an off state, so that a  │
│ voltage difference between each pixel electrode and a   │
│ common electrode arranged opposite to the pixel         │
│ electrode is equal to a target voltage                  │
└─────────────────────────────────────────────────────┘
```

**Fig. 2**

## Description

This application claims the priority of Chinese patent application No. 201210187110.4, titled "METHOD AND APPARATUS FOR DRIVING ACTIVE MATRIX DISPLAY PANEL, AND DISPLAY", filed with the State Intellectual Property Office of PRC on June 7, 2012, which is incorporated herein by reference in its entirety.

## FIELD OF THE INVENTION

The present invention relates to the field of the active matrix display technology, and in particular to a method and an apparatus for driving an active matrix display panel, and a display.

## BACKGROUND OF THE INVENTION

With the development of the liquid crystal display (LCD) technology, the desired resolution of the liquid crystal display is increasingly high, while the desired frame of the module is increasingly narrow. Therefore, more wires are distributed in the wiring region, resulting in increased density. In view of technical bottlenecks in the process such as requirements on minimum wiring width and distance, a technology of double-layer scanning lines has been applied widely. In practical manufacture, two metal materials are generally used as the scanning lines, but since the resistivities of the two metal materials are different, matching between the resistances of the two metal scanning lines is important, and thus line width and film thickness are needed to be calculated accurately in the designing process and to be controlled strictly in the manufacture process. But in practical process, fluctuations and errors in the designing or manufacturing process may cause mismatching between the resistances of the two layers of scanning lines, resulting in different feed-through voltages of TFTs (Thin Film Transistors), and thus the display uniformity is poor, for example, horizontal strips of a gray scale image may appear in the display, which deteriorates image display quality.

In the prior art, in order to solve the problems above, the adopted method is that each of the scanning lines is implemented by connecting two kinds of metal wirings, which decreases the difference caused by the two materials themselves. When the method is used in practical design, the resistance of each wiring is needed to be simulated accurately, to control the resistance of each wiring electrode. Since each gate electrode is formed by two kinds of metal wirings, and is required to be implemented by a via-hole connection in the manufacture process, the complexity of the manufacturing is increased and the production yield is influenced. Also, although the resistance of each scanning line is simulated in designing, actual fluctuations in the manufacturing may cause the resistances to be matched improperly, and thus part of the displayed image is poor.

More methods for driving the LCD panel may refer to Chinese patent application publication No. CN1825415A, titled "LIQUID CRYSTAL DISPLAY DEVICE PERFORMING DOT INVERSION AND METHOD FOR DRIVING THE SAME".

## SUMMARY OF THE INVENTION

A problem to be solved by the present invention is to compensate the differences of voltage changes of pixel electrodes coupled to different scanning lines when the different scanning lines turn from an on state to an off state, so as to improve display quality of an active matrix display panel.

In order to solve the above problem, according to an embodiment of the present invention, it is provided a method for driving an active matrix display panel. The active matrix display panel includes: a plurality of scanning lines; a plurality of data lines intersecting with the plurality of scanning lines; pixel electrodes provided in regions surrounded by adjacent scanning lines and adjacent data lines, the pixel electrodes being coupled to the scanning lines and the data lines; and common electrodes arranged opposite to the pixel electrodes. The method for driving the active matrix display panel includes: turning on the scanning lines sequentially; adjusting common voltages applied to the common electrodes arranged opposite to the pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

Optionally, the active matrix display panel further includes a scanning line driving circuit and a common electrode driving circuit. The adjusting common voltages applied to the common electrodes includes adjusting the common voltages applied to the common electrodes by setting a register in the common electrode driving circuit during a line blanking period of the scanning line driving circuit.

Optionally, the line blanking period includes a period during which a row synchronizing signal is at a low level.

Optionally, the adjusted common voltages form an alternating square-wave voltage signal in a continuous period.

Optionally, the different scanning lines are scanning lines with different resistances.

Optionally, the active matrix display panel includes scanning lines of two different materials; the first material is aluminium/molybdenum, and the second material is molybdenum/aluminium/molybdenum.

Optionally, the scanning lines with different resistances are scanning lines with different line widths.

Optionally, the common electrodes include a plurality of common electrode lines. The pixel electrodes correspondingly coupled to each of the scanning lines are oppositely provided with one of the common electrode lines, and the common electrode lines are driven by a same output terminal of the common electrode driving circuit.

Optionally, the common electrode includes a plurality of common electrode lines. The pixel electrodes correspondingly coupled to each of the scanning lines are oppositely provided with one of the common electrode lines, and each of the common electrode lines is driven by a different output terminal of the common electrode driving circuit respectively.

Optionally, the common electrodes are arranged on a TFT substrate or a CF substrate.

Optionally, the active matrix display panel is any one of an OLED display panel, an active matrix display panel and an electronic paper panel.

Based on the method for driving the active matrix display panel described above, according to an embodiment of the present invention, it is further provided an apparatus for driving an active matrix display panel. The active matrix display panel includes a plurality of scanning lines; a plurality of data lines intersecting with the plurality of scanning lines; pixel electrodes provided in regions surrounded by adjacent scanning lines and adjacent data lines, the pixel electrodes being coupled to the scanning lines and the data lines; and common electrodes arranged opposite to the pixel electrodes. The apparatus for driving the active matrix display panel includes a scanning line driving circuit adapted for applying scanning voltages to the scanning lines, a data line driving circuit adapted for applying data voltages to the data lines, and a common electrode driving circuit adapted for applying common voltages to the common electrodes. The common electrode driving circuit adjusts the common voltages applied to the common electrodes arranged opposite to the pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

Optionally, the adjusted common voltages form an alternating square-wave voltage signal in a continuous period.

Optionally, the different scanning lines are scanning lines with different resistances.

Optionally, the active matrix display panel includes scanning lines of two different materials; the first material is aluminium/molybdenum, and the second material is molybdenum/aluminium/molybdenum.

Optionally, the scanning lines with different resistances are scanning lines with different line widths.

Optionally, the common electrode includes a plurality of common electrode lines. The pixel electrodes correspondingly coupled to each of the scanning lines are oppositely provided with one of the common electrode lines, and the common electrode lines are driven by a same output terminal of the common electrode driving circuit.

Optionally, the common electrode includes a plurality of common electrode lines. The pixel electrodes correspondingly coupled to each of the scanning lines are oppositely provided with one of the common electrode lines, and each of the common electrode lines is driven by a different output terminal of the common electrode driving circuit respectively.

Optionally, the common electrodes are arranged on a TFT substrate or a CF substrate.

Optionally, the active matrix display panel is any one of an OLED display panel, an active matrix display panel and an electronic paper panel.

According to an embodiment of the present invention, it is further provided a display including the apparatus for driving the active matrix display panel described above.

As compared with the prior art, the technical solution according to the present invention has the following benefit effects.

In driving the active matrix display panel, when the different scanning lines turn from an on state to an off state, the voltage changes of the pixel electrodes coupled to the different scanning lines are different (i.e., the feed-through voltages of the pixels corresponding to the different scanning lines are different). In a case that data signals applied to the data lines are not changed, the voltage changes (i.e., the feed-through voltages) of the different pixel electrodes generated when the scanning lines turn from the on state to the off state are compensated by adjusting the common voltages applied to the common electrodes, so that a voltage difference between each of the pixel electrode and a common electrode arranged opposite to the pixel electrode is equal to a target voltage. In other words, the pixel voltage applied to each of the pixel units is equal to the target voltage, so as to improve the quality of image display. In the practical process, according to the present technical solution, only the common voltages of the common electrodes are adjusted to counteract the influence of the feed-through voltages on the pixel voltages and compensate the voltage changes of the pixel electrodes generated when the scanning lines correspondingly coupled to the pixel electrodes turn from an on state to an off state, without changing the structure of the active matrix display panel. Therefore, the complexity of manufacturing process is decreased, and the production yield is improved.

In specific embodiments, the different scanning lines are scanning lines with different resistances, such as scanning lines with different materials, and scanning lines with different line widths. In the present technical solution, the common voltages applied to the common electrodes are adjusted by setting a register in the common electrode driving circuit during a line blanking period of the scanning line driving circuit. The line blanking period includes a period during which the row synchronizing signal is at a low level. Therefore, adjusting the common voltages applied to the common electrodes during this period will not affect normal display of the active matrix display panel.

**BRIEF DESCRIPTION OF THE DRAWINGS**

Fig. 1A is an equivalent circuit diagram of a pixel unit in an active matrix display panel according to the present invention;

Fig. 1B is an equivalent circuit diagram of another pixel unit in an active matrix display panel according to the present invention;

Fig. 2 is a schematic flowchart of an embodiment of a method for driving the active matrix display panel according to the present invention;

Fig. 3 is a structural schematic diagram of a pixel array in an active matrix display panel according to the present invention;

Fig. 4 is a structural schematic diagram of a pixel array in another active matrix display panel according to the present invention;

Fig. 5 is a diagram of state changes of signals in a row inversion mode when each of row scanning lines turns off in a case that the method for driving the active matrix display panel according to the present invention is applied to the pixel array of the active matrix display panel illustrated in Fig. 3;

Fig. 6 is a diagram of state changes of signals in a dot inversion mode when each of row scanning lines turns off in a case that the method for driving the active matrix display panel according to the present invention is applied to the pixel array of the active matrix display panel illustrated in Fig. 3;

Fig. 7 is a specific structural schematic diagram of an apparatus for driving an active matrix display panel according to the present invention; and

Fig. 8 is a specific structural schematic diagram of another apparatus for driving an active matrix display panel according to the present invention.

**DETAILED DESCRIPTION OF THE INVENTION**

For the problems in the prior art, the inventor, after researching, provides a method and an apparatus for driving an active matrix display panel, and a display including the apparatus for driving the active matrix display panel. In the present technical solution, only common voltages of common electrodes are adjusted to counteract the influence of feed-through voltages on pixel voltages and compensate voltage changes of pixel electrodes generated when scanning lines correspondingly coupled to the pixel electrodes turn from an on state to an off state, without changing the structure of the active matrix display panel. Therefore, the complexity of manufacturing process is reduced, and the production yield is improved. Furthermore, in the present technical solution, common voltages applied to the common electrodes are adjusted by setting a register in a common electrode driving circuit during a line blanking period of the scanning line driving circuit. The line blanking period includes a period during which the row synchronizing signal is at a low level. Therefore, adjusting the common voltages applied to the common electrodes during this period will not affect normal display of the active matrix display panel.

To make the purposes, features and advantages of the present invention more apparent and better understood, specific embodiments of the present invention will be described in detail in conjunction with the accompanying drawings.

More specific details will be set forth in the following descriptions for sufficient understanding of the invention. However, the invention can also be implemented by other ways different from the ways described herein, and similar extensions can be made by those skilled in the art without departing from the spirit of the invention. Therefore, the invention is not limited to the specific embodiments disclosed hereinafter.

In order to understand the technical solution of the present invention, the principle of generating the feed-through voltage and the influence of the feed-through voltage on the pixel voltage are described firstly for the active matrix display panel.

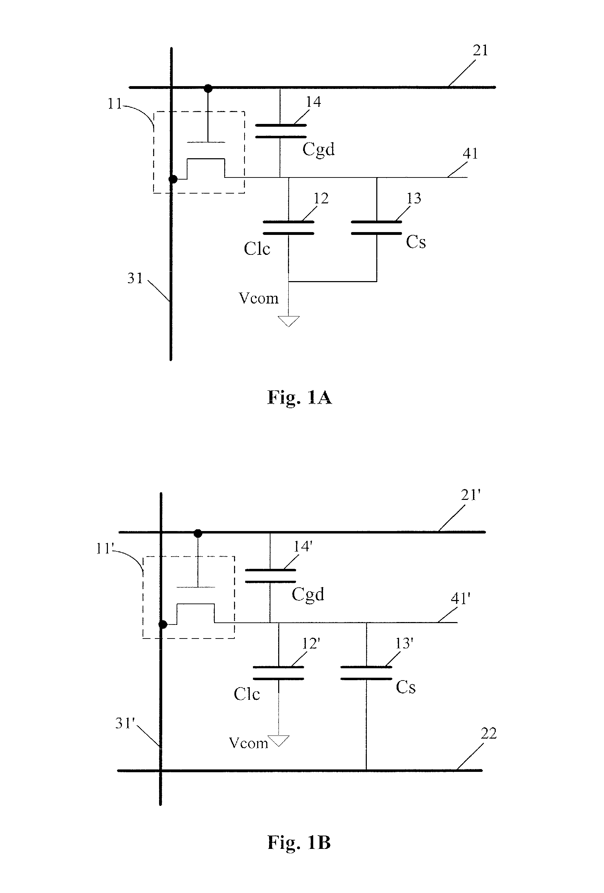

Figs. 1A and 1B are equivalent circuit diagrams of pixel units in the active matrix display panel according to the present invention. In the pixel unit illustrated in Fig. 1A, a storage capacitor Cs is formed by using a pixel electrode and a common electrode, and is referred to as Cs on common. In the pixel unit illustrated in Fig. 1B, a storage capacitor Cs is formed by using a pixel electrode and a next gate wire (i.e., scanning line), and is referred to as Cs on gate. The principles of generating the feed-through voltage are the same for the pixel units of the two circuit structures, and it is described below by taking the schematic diagram of the circuit structure of the pixel unit illustrated in Fig. 1A as an example.

Referring to Fig. 1A, the pixel unit includes: a TFT switch 11; a scanning line 21 connected to the gate electrode of the TFT switch; a data line 31 connected to the source/drain electrode of the TFT switch; a pixel electrode 41 connected to the drain/source electrode of the TFT switch; and an active matrix capacitor 12 and a storage capacitor 13 connected in parallel and formed between the pixel electrode 41 and a common electrode Vcom.

Those skilled in the art know that the voltage applied to the gate electrode of the TFT switch 11 is changed greatly at the moment when the scanning line 21 turns on or off, which influences the voltage change of the pixel electrode 41 via the parasitic capacitor 14. Specifically, when the scanning line 21 turns on, an upward feed-through voltage is generated via the parasitic capacitor 14 and applied to the pixel electrode 41. But the scanning line 21 at this time is in an on state, and data signal applied to the data line 11 starts to charge or discharge the pixel electrode 41, therefore, even the initial voltage on the pixel electrode 41 is not correct due to the feed-through voltage, the gray scale display of the pixel unit is not greatly influenced by the feed-through voltage generated when the scanning line 21 turns on because the data signal charges/discharges the pixel electrode 41 to reach a correct voltage.

However, when the scanning line 21 turns off, the data signal applied to the data line 31 stops charging the pixel electrode 41 and at this time a downward feed-through voltage is generated on the pixel electrode 41 via the parasitic capacitor 14. The feed-through voltage will continuously influence the voltage of the pixel electrode 41 until the scanning line 21 turns on next time. Thus the correctness of the gray scale display will be greatly influenced. Therefore, the present technical solution mainly focuses on that, for the voltage change generated when the scanning line turns from an on state to an off state (i.e., when the square-wave voltage applied to the scanning line is at a falling edge), how to compensate the downward feed-through voltage generated on the pixel electrode so as to maintain a correct gray scale display.

In addition, on the active matrix display panel, the scanning signal generated by the scanning line driving circuit is transmitted to the pixel units connected to the scanning line driving circuit via each of row scanning lines. Since the scanning line itself has a resistance (the resistance of the scanning line includes the resistance of the scanning line located in the pixel array region and the resistance of the scanning line wiring located in the wiring region around the pixel array region), and a certain capacitance is formed between the scanning line and, the other metal or non-metal layer on the active matrix display panel, each of the pixel units can be equivalent to a resistor-capacitor circuit (that is RC circuit). Therefore, a signal delay may occur when a scanning signal in each row is transmitted to the pixel units connected to the row, and the delay time is directly proportional to the product of the resistance and the capacitance.

In the present technical solution, the wiring region of the active matrix display panel may include scanning lines with different resistances, for example, the active matrix display panel includes scanning lines of two different materials, or scanning lines with different line widths, or scanning lines of different materials and with different line widths, all of which may cause different resistances of the scanning lines. Thus the signal delay time may be correspondingly different in the scanning signal transmission. Therefore, when the scanning lines turn from an on state to an off state, voltage changes of the pixel electrodes coupled to the different scanning lines are different, i.e., the feed-through voltages of the pixels corresponding to the different scanning lines are different. Therefore in a case that the data signal applied to the data line is unchanged, the feed-through voltages of different pixel electrodes are compensated by adjusting the common voltages applied to the common electrodes, so that the pixel voltage applied to each of the pixel units is equal to a target voltage. Therefore, the gray scale display of the pixel unit is correct, and the quality of the image display is optimized.

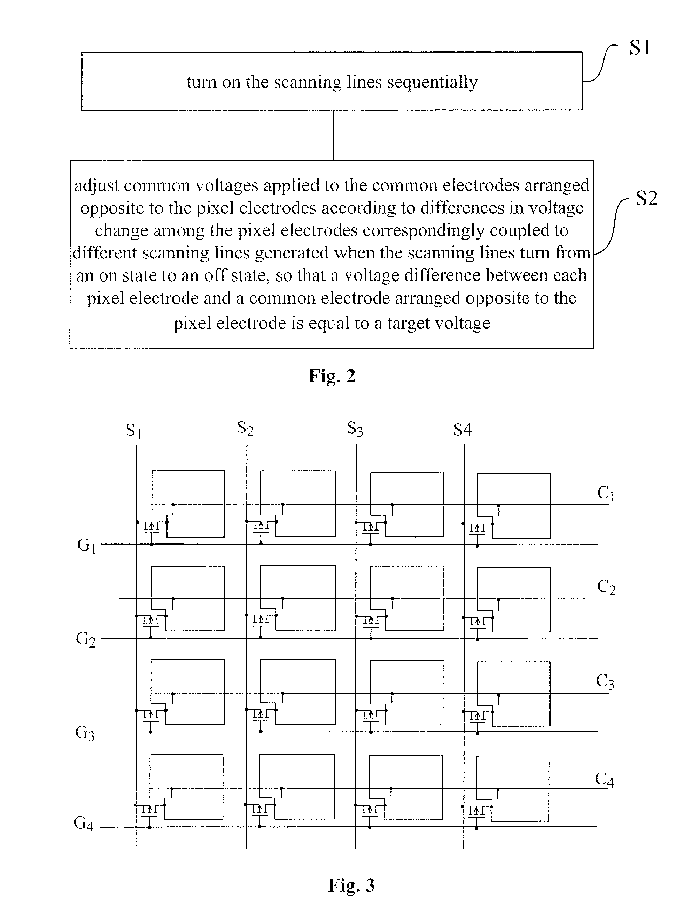

Fig. 2 is a schematic flowchart of a specific embodiment of a method for driving an active matrix display panel according to the present invention. Referring to Fig. 2, the method for driving the active matrix display panel includes steps as follows:

Step S1: turning on the scanning lines sequentially;

Step S2: adjusting common voltages applied to common electrodes arranged opposite to pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

In the present technical solution, the active matrix panel includes: a plurality of scanning lines, a plurality of data lines intersecting with the plurality of scanning lines, pixel electrodes arranged in regions surrounded by adjacent scanning lines and adjacent data lines, the pixel electrode being coupled to the scanning lines and the data lines, and common electrodes arranged opposite to the pixel electrodes. The meaning of the pixel electrodes being coupled to the scanning lines and the data lines is that a thin film transistor (TFT) is provided in each of the pixel units, the gate electrode of the TFT is electrically connected with the scanning line, the source/drain electrode of the TFT is electrically connected with the data line, and the drain/source electrode of the TFT is electrically connected with the pixel electrode.

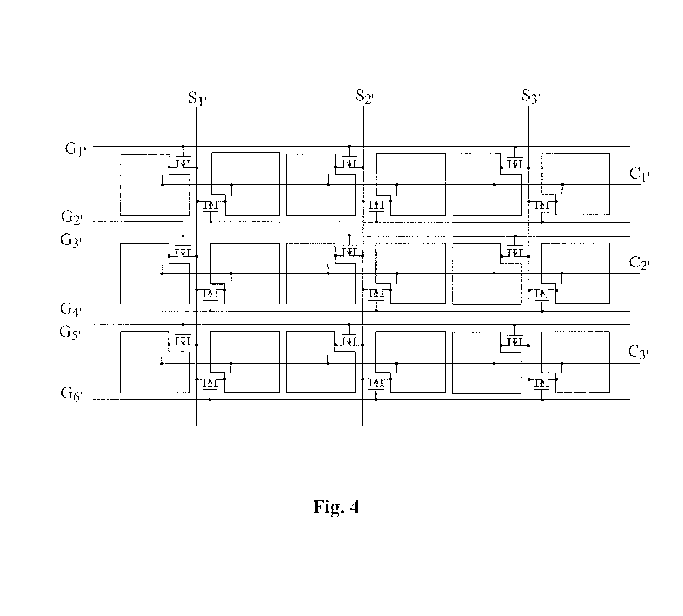

Further, in a practical application, the active matrix panel may be a conventional pixel array structure in which a row of pixel units are controlled by a scanning line and a column of pixel units are controlled by a data line. The active matrix panel may also have a pixel array structure referring to as a dual gate structure, in which a row of pixel units are controlled by two scanning lines and two adjacent columns of pixel units share a same data line. The two pixel array structures of the active matrix display panel will be described in detail below in conjunction with Fig. 3 and Fig. 4.

Specifically, Fig. 3 is a structural schematic diagram of the pixel array in the conventional active matrix display panel. Referring to Fig. 3, the pixel array includes pixel units each containing a thin film transistor (TFT); a plurality of scanning lines G1, G2, G3, G4, extending in a horizontal direction, respectively connecting to gate electrodes of the TFTs in the pixel units, and adapted for supplying scanning voltages to the pixel units so as to turn on the TFTs; a plurality of data lines S1, S2, S3, S4, extending in a vertical direction, respectively connecting to first electrodes (for example, source electrodes or drain electrodes) of the TFTs in the pixel units, and adapted for supplying data voltages to the pixel electrodes in the pixel units; and common electrode lines C1, C2, C3, C4, adapted for supplying common voltages to common electrodes in the pixel units. In the present embodiment, the scanning lines G1, G2, G3, G4 adopt double-layer wiring, i.e., scanning voltages adapted for turning on the TFTs are supplied to the pixel units by using scanning lines with different resistances.

Fig. 4 is a structural schematic diagram of the pixel array in the active matrix display panel which adopts the dual gate structure. Referring to Fig. 4, the pixel array includes: pixel units containing thin film transistors; a plurality of scanning lines G1', G2'. G3', G4'. G5', G6', extending in the horizontal direction, respectively connecting to gate electrodes of the TFTs in the pixel units, and adapted for supplying scanning voltages to the pixel units so as to turn on the TFTs; a plurality of data lines S1', S2', S3', extending in the vertical direction, respectively connecting to first electrodes (for example, source electrodes or drain electrodes) of the TFTs in the pixel units, and adapted for supplying data voltages to the pixel electrodes in the pixel units; and common electrode lines C1', C2', C3' electrically connected with each other and adapted for supplying common voltages to common electrodes in the pixel units. In the present embodiment, the scanning lines G1', G2', G3', G4', G5', G6' adopt double-layer wiring, i.e., scanning voltages adapted for turning on the TFTs are supplied to the pixel units by using scanning lines with different resistances.

Different from the conventional pixel array, in the dual gate structure, two scanning lines are connected alternately to pixel units in a row, for example, the scanning line G1' is connected to pixel units in odd-numbered column of a first row, and the scanning line G2' is connected to pixel units in even-numbered column of the first row. Each two adjacent columns of pixel units share one data line, for example, pixel units in a first column and a second column share the data line S1'.

It should be noted that, in the pixel array structures of the active matrix display panels as illustrated in Fig. 3 and Fig. 4, each of the common electrode lines may be driven by a same output terminal of the common electrode driving circuit. Therefore, the common voltages applied to all the common electrode lines are the same at the same time. Each of the common electrode lines may also be driven by a different output terminal of the common electrode driving circuit respectively, i.e., the number of the output terminals of the common electrode driving circuit is the same as the number of the common electrode lines, and each of the common electrode lines corresponds to one of the output terminals. Therefore, the common voltage applied to each of the common electrode lines may be different at the same time.

The method for driving the active matrix display panel provided by the present technical solution may be used in the two pixel array structures described above, but it is not limited herein in the practical application.

In a specific embodiment, as described in Step S1, the scanning lines are turned on sequentially.

Specifically, scanning signals are generally applied to each of the scanning lines sequentially in an order from top to bottom of the pixel array, and corresponding TFTs in the pixel units are turned on row by row. In the practical application, the scanning signals applied to the scanning lines is an alternating square-wave voltage signal, and the TFT in the pixel unit connected to the scanning line turns on when the scanning signal is at a high level. Taking an active matrix display panel having a resolution of 1024*768 for an example, the update frequency of the active matrix display panel is generally 60Hz, the time for displaying each of the images is 1/60=16.67ms, and the turning-on time assigned to each of the scanning lines is 16.67ms/768=21.7us since there are totally 768 rows of scanning lines, therefore, the applied scanning signals are pulse square-wave signals with the width of 21.7us one by one.

As described in Step S2, the common voltages applied to the common electrodes arranged opposite to the pixel electrodes are adjusted according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

As described with respect to Fig. 1A and Fig. 1B above, each of the scanning signals applied to the scanning line is changed greatly when the scanning lines turns from an on state to an off state. The feed-through voltage is generated on the pixel electrode via the parasitic capacitor between the gate electrode and the drain electrode of the TFT, which leads to a sudden change of the voltage of the pixel electrode.

Specifically, referring to Fig. 1A, it is assumed that the gate voltage is Vg1 and the pixel electrode voltage is Vd1 when the scanning line turns on; and the gate voltage is Vg2 and the pixel electrode voltage is Vd2 when the scanning line turns off. Ideally, the gate voltage is changed instantaneously, and Qopen=(Vd1-Vg1)*Cgd+(Vd1-Vcom)*(C1c+Cs) when the scanning line turns on is equal to Qclose=(Vd2-Vg2)*Cgd+(Vd2-Vcom)*(C1c+Cs) when the scanning line turns off according to charge conservation law, therefore, it is obtained that the feed-through voltage generated on the pixel electrode, i.e., the change of the pixel electrode voltage when the scanning line turns from an on state to an off state is $\Delta V$=Vd2-Vd1=(Vg2-Vg1)*Cgd/(Cgd+C1c+Cs). However, in the practical application, a period of time is needed when the scanning line turns from an on state to an off state. Therefore, when considering the change of the pixel electrode voltage, a further optimization may be performed, i.e., the change of the pixel electrode voltage is: $\Delta V_1$=Vd2-Vd1=(Vg2-Vg1)*Cgd/(Cgd+Clc+Cs)+F(I, t, R, C), where t in the function F (I, t, R, C) is 0 ideally, but in the practical application, the time t is different due to RC delay of the scanning line with different resistance, so the amount of the change is different.

In the function F (I, t, R, C), I is a current between the pixel electrode and the data line, t is the time for the TFT turning from on to off, R is the resistance of the scanning line, and C is the capacitance formed by the scanning line and other metal layers on the active matrix display panel.

In other embodiments, besides the parasitic capacitor Cgd, the storage capacitor Cs and the active matrix capacitor Clc described above, the capacitor connected to the pixel electrode in each of the pixel units may also include a capacitor Cpd of a data line of the pixel unit itself, a capacitor Cpd' of a data line of an adjacent pixel unit, a capacitor Cpg of a scanning line of the pixel unit itself, and a capacitor Cpg' of a scanning line of an adjacent pixel unit.

In this case, the feed-through voltage generated on the pixel electrode is $\Delta V_2$= Vd2'-Vd1'-(Vg2-Vg1)*(Cgd+Cpg)/(Cgd+Clc+Cs+Cpd+Cpd'+Cpg+Cpg')+F(I, t, R, C), where in the function F(I, t, R, C), I is a current between the pixel electrode and the data line, t is the time for the TFT turning from on to off, R is the resistance of the scanning line, and C is the capacitance formed by the scanning line and other metal layers or non-metal layers on the active matrix display panel. Therefore, the capacitive coupling effect of these capacitors is needed to be considered when determining the feed-through voltage of the pixel electrode of each of the pixel units.

In the embodiment of the present invention, the scanning lines with different resistances, such as scanning lines with different materials or scanning lines with different line widths, are adopted in the wiring region of the active matrix display panel. In this case, the scanning lines in wiring region generally adopt the double-layer wiring. When the scanning lines in the wiring region are different from the scanning lines in the display region, the scanning lines in the wiring region are arranged on source and drain layer, and are electrically connected to the scanning lines in the display region by via-holes. When the scanning lines in the wiring region are the same as the scanning lines in the display region, it is not needed to form the structure as above. In the practical application, the way to arrange the lines is not limited to the above, and those skilled in the art may make various extensions without departing from the scope of the principle. Further, the scanning lines with the same resistance may be adopted in the display region (that is the pixel array region) of the active matrix display panel. In the process of transmitting the scanning signals generated by the scanning line driving circuit to the display region through the scanning lines with different resistances in the wiring region, since the RC delay time is different in the process of transmitting the scanning signals to each of pixel units through the scanning lines with different resistances, different feed-through voltages are generated on the pixel electrodes, which causes the differences of the pixel voltage changes. In the present embodiment, in a case that the scanning lines are manufactured with different materials, the first material is aluminium/molybdenum and the second material is molybdenum /aluminium/molybdenum. However, in the practical application, it is not limited herein.

In other embodiments, scanning lines with different resistances, such as scanning lines with different materials or scanning lines with different line widths, may also be adopted in the display region of the active matrix display panel. Based on the same principle, in the process of transmitting the scanning signals generated by the scanning line driving circuit to each row of pixel units through the scanning lines with different resistances in the display region, since the RC delay time is different in the process of transmitting the scanning signals to each of pixel units through the scanning lines with different resistances, different feed-through voltages are generated on the pixel electrodes, which cause the differences of the pixel voltage changes.

Therefore, in this step, the different feed-through voltage generated on the pixel electrode is compensated by adjusting the common voltage applied to the common electrode arranged opposite to the pixel electrode. In the present embodiment, the scanning signals applied to the pixel units connected to the scanning lines with the same resistance are consistent. Therefore, the adjusted amplitude of the common voltage signal is the amount of the changes among different feed-through voltages.

In the practical application, for example, two different scanning lines are adopted in the active matrix display panel. Firstly, only the first scanning line is driven by the scanning line driving circuit so as to turn on the TFTs in the pixel units connected to the first scanning line and charge/discharge the pixel electrodes through the data lines connected to the pixel units. Then, a first feed-through voltage is measured by a voltage measuring device when the first scanning line turns from an on state to an off state. Subsequently, only the second scanning line is driven by the scanning line driving circuit so as to turn on the TFTs in the pixel units connected to the second scanning line and charge/discharge the pixel electrodes through the data lines connected to the pixel units. Then, a second feed-through voltage is measured by the voltage measuring device when the second scanning line turns from an on state to an off state.

Further, based on the difference between the first feed-through voltage and the second feed-through voltage described above, the value of the register in the common electrode driving circuit is adjusted to make the pixel voltage of the pixel units in each row equal to the target voltage. Specifically, the common voltage signal applied to the common electrode line may be adjusted by setting the register in the common electrode driving circuit during a line blanking period of the scanning line driving circuit. The line blanking period includes a period during which a row synchronizing signal is at a low level. Specifically, the line blanking period includes a synchronizing front porch stage, a synchronizing back porch stage, and the like. Those skilled in the art understand that adjusting the common voltage signal by setting the register in the common electrode driving circuit during the line blanking period will not influence the normal display of the active matrix display panel.

In the present embodiment, the target voltage may be determined according to the formula as follows: $\Delta V_f = V_f^{'} + \Delta V_f^{'}(I,t,R,C)$, where $\Delta V_f$ is the feed-through voltage, $V_f^{'}$ is a fixed value, and $\Delta V_f^{'}(I,t,R,C)$ is a function of I, t, R and C. In the function, I is the current between the pixel electrode and the data line, t is the time for the TFT turning from on to off, R is the resistance of the scanning line, and C is the capacitance formed by the scanning line and other metal layers on the active matrix display panel. $V_c = V_c^{'} + \Delta V_c^{'}$, where $V_c$ is the common electrode voltage, $V_c^{'}$ is the common electrode voltage before compensation, and $\Delta V_c^{'}$ is the compensation amount. $V_p = V_d + \Delta V_f + V_c = V_d + V_f^{'} + V_c^{'} + (\Delta V_f^{'}(I,t,R,C) + \Delta V_c^{'})$, where $V_p$ is the pixel voltage, and $V_d$ is the pixel electrode voltage. The target voltage is $V_d + V_f^{'} + V_c^{'}$, that is, the common electrode voltage is compensated so as to make $(\Delta V_f^{'}(I,t,R,C) + \Delta V_c^{'})$ of the pixel voltage of the pixel unit controlled by the scanning line with different resistance be 0, i.e., to make the value of $(\Delta V_f^{'}(I,t,R,C) + \Delta V_c^{'})$ be a constant.

In other words, in a case that the data signal applied to the data line is unchanged, different feed-through voltages generated on the different pixel electrodes are compensated by adjusting the common voltages applied to the common electrodes so that the pixel voltage applied to each of the pixel units is equal to the target voltage, which reduces the horizontal strips of the active matrix display panel and improves the image quality. The adjusted common voltages form an alternating square-wave voltage signal in a continuous period.

It should be noted that, in the present embodiment, for the active matrix display panel, the common electrode is provided on a TFT substrate, including an In-Plane-Switching (IPS) type or a Fringe Field Switching (FFS) type; the common electrode may also be provided on a CF substrate, including a Twisted Nematic (TN) type or a Vertical Alignment (VA) type. The active matrix display panel may be any one of an OLED display panel, an active matrix display panel and an electronic paper panel.

The method for driving the active matrix display panel according to the present invention will be described below in conjunction with different polarity inversion modes of the active matrix display panel. Those skilled in the art know that the inversion mode of the polarity of the active matrix display panel mainly includes a frame inversion mode, a row inversion mode, a column inversion mode, and a dot inversion mode.

A First Embodiment

The embodiment is described by taking a row inversion mode as an example, and the structural schematic diagram of the pixel array in the active matrix display panel illustrated in Fig. 3 is referred to. It should be noted that, Fig. 3 is only an exemplary illustration and is part of the pixel array in the active matrix display panel. Moreover, the structure of the active matrix display panel herein is simplified, and only the formed part relating to the present solution is displayed, which does not intent to limit the protective scope. The pixel array structure in the active matrix display panel illustrated in Fig. 3 may refer to the specific embodiment described above, and the description thereof is omitted herein.

In the present embodiment, in the active matrix display panel, the scanning lines G1 and G2 are the same scanning lines, and the scanning lines G3 and G4 are the same scanning lines. However, the scanning line G1 (or G2) is different from the scanning line G3 (or G4). For example, the scanning lines G1 and G2 are manufactured with a first material, and the scanning lines G3 and G4 are manufactured with a second material. The first material is aluminium/molybdenum, and the second material is molybdenum/aluminium/molybdenum. But in the practical application, it is not limited to the metal materials described above. For another example, the scanning lines G1 and G2 have a first line width, and the scanning lines G3 and G4 have a second line width. For another example, the scanning lines G1 and G2, compared with the scanning lines G3 and G4, may be manufactured with different materials and have different line widths. In the practical application, the different scanning lines are not limited to be arranged as illustrated in Fig. 3. For example, the scanning lines may be arranged as follows: the scanning lines G1 and G3 are the same scanning lines and the scanning lines G2 and G4 are the same scanning lines.

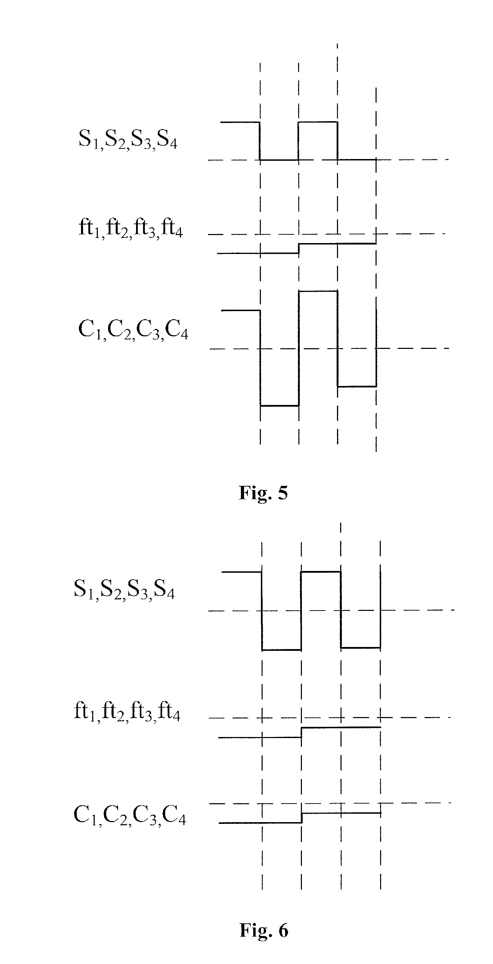

Fig. 5, which is referred to, is a diagram of state changes of signals in a row inversion mode when each of row scanning lines turns off in a case that the method for driving the active matrix display panel according to the present invention is applied to the pixel array of the active matrix display panel illustrated in Fig. 3.

In the row inversion mode, the data voltage applied to the data lines S1, S2, S3, S4 is an alternating square-wave signal. It is assumed that the high level of the data voltage is 2V, the low level of the data voltage is 0V, and the high level of the common electrode voltage originally applied to the common electrode is 4V, the low level of the common electrode voltage originally applied to the common electrode is -4V. As illustrated in Fig. 3, the scanning lines G1 and G2 are scanning lines with the same resistance, and the scanning lines G3 and G4 are scanning lines with the same resistance. It is assumed that the resistance of the scanning lines G3 and G4 is larger than the resistance of the scanning lines G1 and G2. Therefore, as illustrated in Fig. 5, the feed-through voltages generated by the scanning lines G1 and G2 on the pixel electrodes are larger (it is assumed to be -1V), and the feed-through voltages generated by the scanning lines G3 and G4 on the pixel electrodes are smaller (it is assumed to be -0.5V). Therefore, the common voltage signal applied to the common electrode is adjusted according to the different feed-through voltages generated by the different scanning lines on the pixel electrodes. As illustrated in Fig. 5, the adjusted common electrode voltages C1, C2, C3, C4 are alternating square-wave signal, in which the high level C1 of the common electrode voltage corresponding to the scanning lines G1 and G2 is 4V, the low level C2 of the common electrode voltage corresponding to the scanning lines G1 and G2 is -4V, the high level C3 of the common electrode voltage corresponding to the scanning lines G3 and G4 is 4.5V, and the low level C4 of the common electrode voltage corresponding to the scanning lines G3 and G4 is -3.5V. The corresponding level difference compensates the difference of the generated feed-through voltages.

Therefore, the pixel voltage ultimately applied to each of the pixel units is equal to the target voltage, that is, the pixel voltages applied to the pixel units connected to the scanning lines G1 and G2 are respectively |2V-1V-4V|=3V and |0V-1V-(-4V)|=3V, and the pixel voltages applied to the pixel units connected to the scanning lines G3 and G4 are respectively |2V-0.5V-4.5V|=3V and |0V-0.5V-(-3.5V)|=3V.

A Second Embodiment

The embodiment is described by taking a dot inversion mode for an example. Fig. 6, which is referred to, is a diagram of state changes of signals in a dot inversion mode when each of row scanning lines turns off in a case that the method for driving the active matrix display panel according to the present invention is applied to the pixel array of the active matrix display panel illustrated in Fig. 3.

In the dot inversion mode, the data voltage applied to the data lines S1, S2, S3, S4 is also an alternating square-wave signal. It is assumed that the high level of the data signal is 4V, the low level of the data signal is -4V, and the common electrode voltage originally applied to the common electrode is consistent such as -1V. As illustrated in Fig. 3, the scanning lines G1 and G2 are scanning lines with the same resistance, and the scanning lines G3 and G4 are scanning lines with the same resistance. It is assumed that the resistance of the scanning lines G3 and G4 is larger than the resistance of the scanning lines G1 and G2. Therefore, as illustrated in Fig. 6, the feed-through voltages generated by the scanning lines G1 and G2 on the pixel electrodes are larger (it is assumed to be -1V), and the feed-through voltages generated by the scanning lines G3 and G4 on the pixel electrodes are smaller (it is assumed to be -0.5V). Therefore, the common voltage signal applied to the common electrode is adjusted according to the different feed-through voltages generated by the different scanning lines on the pixel electrodes. As illustrated in Fig. 6, the adjusted common electrode signals C1, C2, C3, C4 are an alternating square-wave signal, where the common electrode signals C1 and C2 corresponding to the scanning lines G1 and G2 are -1V, the common electrode signals C3 and C4 corresponding to the scanning lines G3 and G4 are -0.5V. The corresponding level difference compensates the difference of the generated feed-through voltages.

Therefore, the pixel voltage ultimately applied to each of the pixel units is equal to the target voltage, that is, the pixel voltages applied to the pixel units connected to the scanning lines G1 and G2 are respectively |4V-1V-(-1V)|=4V and |-4V-1V-(-1V)|=4V, and the pixel voltages applied to the pixel units connected to the scanning lines G3 and G4 are respectively |4V-0.5V-(-0.5V)|=4V and |-4V-0.5V-(-0.5V)|=4V.

It should be noted that, in the second embodiment described above, since the common electrode voltage originally applied to the common electrode is constant, the second embodiment may be applied to all of the four inversion modes, i.e., the frame inversion mode, the row inversion mode, the column inversion mode and the dot inversion mode. However, in the first embodiment described above, since the common electrode voltage originally applied to the common electrode is varied, the first embodiment may be applied to the frame inversion mode and the row inversion mode. This is because for the column inversion mode and the dot inversion mode, in each row of the pixel units, adjacent pixel units are required to have different polarities. Since the common electrodes of each row of the pixel units are connected to the same common electrode line, and the row of the pixel units is charged/discharged by the data voltage applied to the data line after the scanning line turns on, the positive polarity and the negative polarity can not be displayed simultaneously for the row of the pixel units in a case that the common electrode voltage is varied. Therefore, the column inversion mode and the dot inversion mode are only applied for the second embodiment described above, i.e., in a case that the common electrode voltages originally applied to the common electrodes are the same.

The first embodiment and the second embodiment described above may also be applied to the pixel array of the active matrix display panel as illustrated in Fig. 4, the specific process is similar to the process for the first embodiment and the second embodiment, and the description thereof is omitted herein.

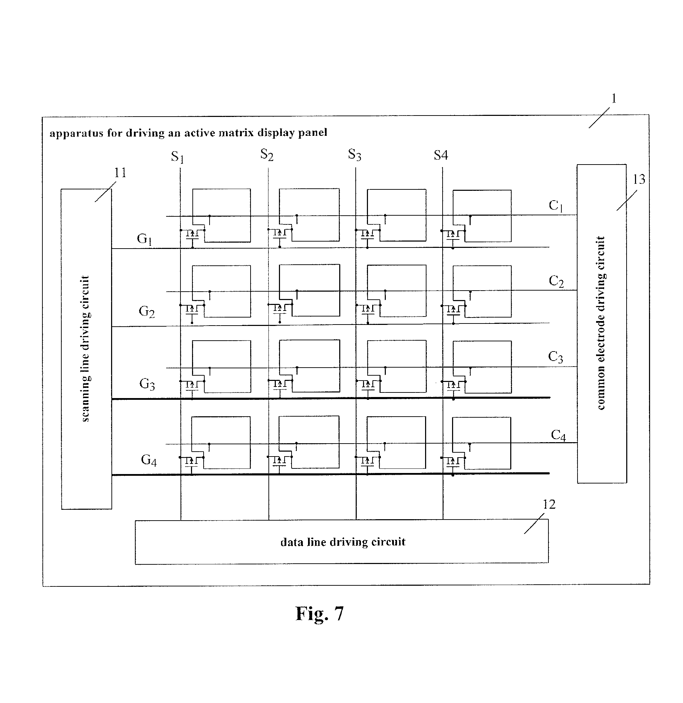

Based on the method for driving the active matrix display panel described above, according to an embodiment of the present invention, it is further provided an apparatus for driving an active matrix display panel. Fig. 7 is a specific structural schematic diagram of the apparatus for driving the active matrix display panel according to the present invention. Referring to Fig. 7, the apparatus 1 for driving the active matrix display panel includes a pixel array which may be the pixel array as illustrated in Fig. 3, a scanning line driving circuit 11 adapted for applying scanning voltages to scanning lines, a data line driving circuit 12 adapted for applying data voltages to data lines, and a common electrode driving circuit 13 adapted for applying common voltages to common electrodes. The common electrode driving circuit 13 adjusts the common voltages applied to the common electrodes arranged opposite to pixel electrodes according to differences in voltage change between/among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage. The adjusted common voltages form an alternating square-wave voltage signal in a continuous period.

Scanning lines with different resistances are adopted in the pixel array. For example, the scanning lines G1 and G2 are the scanning lines with the same resistance, the scanning lines G3 and G4 are the scanning lines with the same resistance, and the scanning line G1 (or G2) and the scanning line G3 (or G4) are scanning lines with different resistances. Specifically, for example, the scanning lines G1 and G2 are manufactured with a first material, and the scanning lines G3 and G4 are manufactured with a second material. The first material is aluminium/molybdenum, and the second material is molybdenum/aluminium/molybdenum. But in the practical application, it is not limited to the metal materials described above. For another example, the scanning lines G1 and G2 have a first line width, and the scanning lines G3 and G4 have a second line width. For another example, the scanning lines G1 and G2, compared with the scanning lines G3 and G4, may be manufactured with different materials and have different line widths.

In the practical application, the common voltages applied to the common electrodes may be adjusted by setting a register in the common electrode driving circuit 13 during a line blanking period of the scanning line driving circuit 11. The line blanking period includes a period during which a row synchronizing signal is at a low level, including a synchronizing front porch stage, a synchronizing back porch stage, and the like. Those skilled in the art understand that adjusting the common voltages by setting the register in the common electrode driving circuit 13 during the line blanking period can not affect the normal display of the active matrix display panel.

It should be noted that, for the apparatus for driving the active matrix display panel illustrated in Fig. 7, in the pixel array, the common electrode includes a plurality of common electrode lines. The pixel electrodes correspondingly coupled to each of the scanning lines are oppositely provided with one of the common electrode lines (for example, C1, C2, C3 and C4), and the common electrode lines are driven by different output terminals of the common electrode driving circuit 13. Therefore, the common electrode driving circuit 13 may apply different common electrode voltages to each of the common electrode lines.

In other embodiments, in the pixel array, the common electrode includes a plurality of common electrode lines (for example, C1, C2, C3 and C4). Pixel electrodes correspondingly coupled to each of scanning lines are oppositely provided with one of the common electrode lines, and the common electrode lines are driven by a same output terminal of the common electrode driving circuit 13. Therefore, the common electrode driving circuit 13 may apply the same common electrode voltage to the common electrode lines.

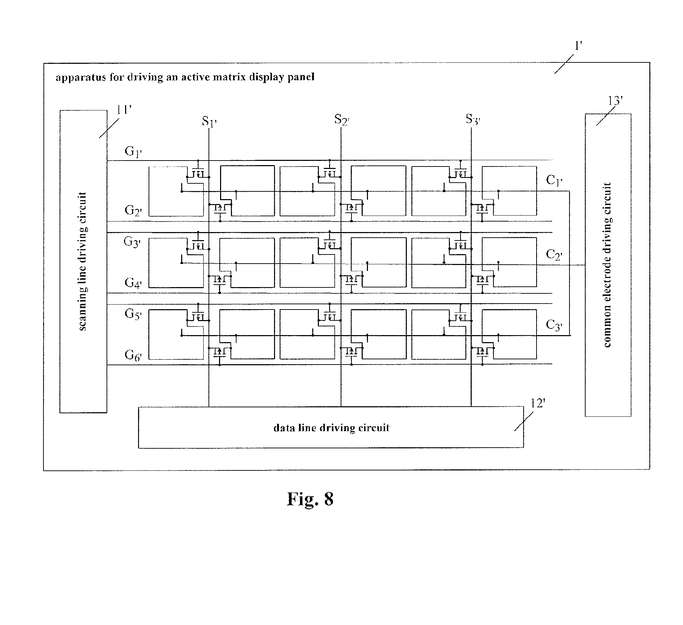

According to an embodiment of the present invention, it is further provided another apparatus for driving an active matrix display panel. Fig. 8 is a specific structural schematic diagram of another apparatus for driving the active matrix display panel according to the present invention. Referring to Fig. 8, the apparatus 1' for driving the active matrix display panel includes a pixel array, a scanning line driving circuit 11', a data line driving circuit 12', and a common electrode driving circuit 13'. The pixel array is different from the pixel array in the embodiment described in conjunction with Fig. 7, and the pixel array is the pixel array illustrated in Fig. 4. Functions of the scanning line driving circuit 11', the data line driving circuit 12' and the common electrode driving circuit 13' are the same as those of the embodiment described in conjunction with Fig. 7 above, and the description thereof is omitted herein.

It should be noted that, for the apparatus for driving the active matrix display panel illustrated in Fig. 8, in the pixel array, the common electrode includes a plurality of common electrode lines (for example, C1', C2' and C3'). The pixel electrodes correspondingly coupled to each of the scanning lines are oppositely provided with one of the common electrode lines, and the common electrode lines are driven by a same output terminal of the common electrode driving circuit 13'. Therefore, the common electrode driving circuit 13' may apply a same common electrode voltage to the common electrode lines.

In other embodiments, in the pixel array, the common electrode includes a plurality of common electrode lines. Pixel electrodes correspondingly coupled to each of scanning lines are oppositely provided with one of the common electrode lines (for example, C1', C2' and C3'), and the common electrode lines are driven by different output terminals of the common electrode driving circuit 13'. Therefore, the common electrode driving circuit 13' may apply different common electrode voltages to the common electrode lines.

For the apparatus for driving the active matrix display panel illustrated in Figs. 7 and 8, in the pixel array, the common electrode may be arranged on a TFT substrate, and may also be arranged on a CF substrate. The active matrix display panel is any one of an OLED display panel, an active matrix display panel and an electronic paper panel.

According to an embodiment of the present invention, it is further provided a display including the apparatus for driving the active matrix display panel as illustrated in Fig. 7 or Fig. 8.

In summary, as compared with the prior art, the present technical solution at least has the following beneficial effects.

In the present technical solution, only the common voltages of the common electrodes are adjusted to counteract the influences of the feed-through voltages on the pixel voltages, and compensate the voltage changes of the pixel electrodes generated when scanning lines correspondingly coupled to the pixel electrodes turn from an on state to an off state, without changing the structure of the active matrix display panel. Therefore, the complexity of the manufacturing process is reduced, and the production yield is improved.

Though the present invention is disclosed by preferred embodiments as described above, it is not intended to limit the present invention. By using the methods and the technical contents disclosed above, possible variations and changes may be made to the technical solutions of the present invention by those skilled in the art without departing from the spirit and the scope of the present invention. Therefore, all of simple changes, equivalent alternations and modifications made to the above embodiments according to the technical principle of the present invention without departing from contents of the technical solution of the present invention fall within the protective scope of the technical solution of the present invention.

**Claims**

1. A method for driving an active matrix display panel, wherein the active matrix display panel comprises a plurality of scanning lines, a plurality of data lines intersecting with the plurality of scanning lines, pixel electrodes provided in regions surrounded by adjacent scanning lines and adjacent data lines, the pixel electrodes being coupled to the scanning lines and the data lines, and common electrodes arranged opposite to the pixel electrodes; the method for driving the active matrix display panel comprises:

   turning on the scanning lines sequentially; and
   adjusting common voltages applied to the common electrodes arranged opposite to the pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

2. The method for driving the active matrix display panel according to claim 1, wherein the active matrix display panel further comprises a scanning line driving circuit and a common electrode driving circuit;
   the adjusting common voltages applied to the common electrodes comprises adjusting common voltages applied to the common electrodes by setting a register in the common electrode driving circuit during a line blanking period of the scanning line driving circuit.

3. The method for driving the active matrix display panel according to claim 2, wherein the line blanking period comprises a period during which a row synchronizing signal is at a low level.

4. The method for driving the active matrix display panel according to claim 1, wherein the adjusted common voltages form an alternating square-wave voltage signal in a continuous period.

5. The method for driving the active matrix display panel according to claim 1, wherein the different scanning lines are scanning lines with different resistances.

6. The method for driving the active matrix display panel according to claim 5, wherein the active matrix display panel comprises scanning lines of two different materials; the first material is aluminium or molybdenum, and the second material is molybdenum, aluminium or molybdenum.

7. The method for driving the active matrix display panel according to claim 5, wherein the scanning lines with different resistances are scanning lines with different line widths.

8. The method for driving the active matrix display panel according to claim 1, wherein the common electrodes comprises a plurality of common electrode lines; the pixel electrodes correspondingly coupled to each of the scanning lines are oppositely provided with one of the common electrode lines, and the common electrode lines are driven by a same output terminal of the common electrode driving circuit.

9. The method for driving the active matrix display panel according to claim 1, wherein the common electrodes comprises a plurality of common electrode lines; the pixel electrodes correspondingly coupled to each of the scanning lines are oppositely provided with one of the common electrode lines, and each of the common electrode lines is driven by a different output terminal of the common electrode driving circuit respectively.

10. The method for driving the active matrix display panel according to claim 1, wherein the common electrodes are arranged on a TFT substrate or a CF substrate.

11. The method for driving the active matrix display panel according to claim 1, wherein the active matrix display panel is any one of an OLED display panel, an active matrix display panel and an electronic paper panel.

12. An apparatus for driving an active matrix display panel, wherein the active matrix display panel comprises a plurality of scanning lines; a plurality of data lines intersecting with the plurality of scanning lines; pixel electrodes provided in regions surrounded by adjacent scanning lines and adjacent data lines, the pixel electrodes being coupled to the scanning lines and the data lines; and common electrodes arranged opposite to the pixel electrodes; the apparatus for driving the active matrix display panel comprises:

a scanning line driving circuit adapted for applying scanning voltages to the scanning lines;
a data line driving circuit adapted for applying data voltages to the data lines; and
a common electrode driving circuit adapted for applying common voltages to the common electrodes;
wherein the common electrode driving circuit adjusts the common voltages applied to the common electrodes arranged opposite to the pixel electrodes according to differences in voltage change among the pixel electrodes correspondingly coupled to different scanning lines generated when the scanning lines turn from an on state to an off state, so that a voltage difference between each of the pixel electrodes and a common electrode arranged opposite to the pixel electrode is equal to a target voltage.

13. The apparatus for driving the active matrix display panel according to claim 12, wherein the adjusted common voltages form an alternating square-wave voltage signal in a continuous period.

14. The apparatus for driving the active matrix display panel according to claim 12, wherein the different scanning lines are scanning lines with different resistances.

15. The apparatus for driving the active matrix display panel according to claim 14, wherein the active matrix display panel comprises scanning lines of two different materials; the first material is aluminium or molybdenum, and the second material is molybdenum, aluminium or molybdenum.

16. The apparatus for driving the active matrix display panel according to claim 14, wherein the scanning lines with different resistances are scanning lines with different line widths.

**17.** The apparatus for driving the active matrix display panel according to claim 12, wherein the common electrodes comprises a plurality of common electrode lines; the pixel electrodes correspondingly coupled to each of the scanning lines are oppositely provided with one of the common electrode lines, and the common electrode lines are driven by a same output terminal of the common electrode driving circuit.

**18.** The apparatus for driving the active matrix display panel according to claim 12, wherein the common electrode comprises a plurality of common electrode lines; the pixel electrodes correspondingly coupled to each of the scanning lines are oppositely provided with one of the common electrode lines, and each of the common electrode lines is driven by a different output terminal of the common electrode driving circuit respectively.

**19.** The apparatus for driving the active matrix display panel according to claim 12, wherein the common electrodes are arranged on a TFT substrate or a CF substrate.

**20.** The apparatus for driving the active matrix display panel according to claim 12, wherein the active matrix display panel is any one of an OLED display panel, an active matrix display panel and an electronic paper panel.

**21.** A display comprising the apparatus for driving the active matrix display panel according to any one of claims 12 to 20.

**Fig. 1A**

**Fig. 1B**

turn on the scanning lines sequentially ⟍ S1

adjust common voltages applied to the common electrodes arranged opposite to the pixel electrodes according to differences in voltage change among the pixel electrodes correspondingly coupled to different scanning lines generated when the scanning lines turn from an on state to an off state, so that a voltage difference between each pixel electrode and a common electrode arranged opposite to the pixel electrode is equal to a target voltage ⟍ S2

**Fig. 2**

**Fig. 3**

**Fig. 4**

$S_1, S_2, S_3, S_4$

$ft_1, ft_2, ft_3, ft_4$

$C_1, C_2, C_3, C_4$

**Fig. 5**

$S_1, S_2, S_3, S_4$

$ft_1, ft_2, ft_3, ft_4$

$C_1, C_2, C_3, C_4$

**Fig. 6**

**Fig. 7**

**Fig. 8**

# INTERNATIONAL SEARCH REPORT

| International application No. |
| --- |
| PCT/CN2012/086193 |

**A. CLASSIFICATION OF SUBJECT MATTER**

See the extra sheet
According to International Patent Classification (IPC) or to both national classification and IPC

**B. FIELDS SEARCHED**

Minimum documentation searched (classification system followed by classification symbols)

IPC: G09G 3/-

Documentation searched other than minimum documentation to the extent that such documents are included in the fields searched

Electronic data base consulted during the international search (name of data base and, where practicable, search terms used)

CNPAT, CNKI, WPI, EPODOC: LCD, display, driv+, feed 2d through, common 2d voltage, compensat+, adjust+, regulat+, scan 2d line

**C. DOCUMENTS CONSIDERED TO BE RELEVANT**

| Category* | Citation of document, with indication, where appropriate, of the relevant passages | Relevant to claim No. |
| --- | --- | --- |
| X | TW 200823824 A (CHUNGHWA PICTURE TUBES, LTD.) 01 June 2008 (01.06.2008) description, page 5 to page 10, page 14, page 23 to page 24, and figures 1-13 | 1-3, 5-7, 10-12, 14-16, 19-21 |
| Y | TW 200823824 A (CHUNGHWA PICTURE TUBES, LTD.) 01 June 2008 (01.06.2008) description, page 5 to page 10, page 14, page 23 to page 24, and figures 1-13 | 4, 8, 9, 13, 17, 18 |
| Y | CN 101197121 A (YOUDA PHOTOELECTRIC CO., LTD.) 11 June 2008 (11.06.2008) the abstract, description, page 8 to page 12, and figures 1-5 | 4, 8, 9, 13, 17, 18 |
| A | TW 200813927 A (CHUNGHWA PICTURE TUBES, LTD.) 16 March 2008 (16.03.2008) the whole document | 1-21 |
| A | CN 101847376 A (BOE TECHNOLOGY GROUP CO., LTD.) 29 September 2010 (29.09.2010) the whole document | 1-21 |
| A | CN 101202018 A (HANNSTAR DISPLAY CO., LTD.) 18 June 2008 (18.06.2008) the whole document | 1-21 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 February 2013 (17.02.2013) | 14 March 2013 (14.03.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer XIAO, Wei Telephone No. (86-10) 82245857 |
| --- | --- |

Form PCT/ISA /210 (second sheet) (July 2009)

## INTERNATIONAL SEARCH REPORT
### Information on patent family members

International application No.

PCT/CN2012/086193

| Patent Documents referred in the Report | Publication Date | Patent Family | Publication Date |
|---|---|---|---|
| TW 200823824 A | 01.06.2008 | US 2008117148 A1 | 22.05.2008 |
| | | US 8089435 B2 | 03.01.2012 |
| CN 101197121 A | 11.06.2008 | CN 100561563 C | 18.11.2009 |
| TW 200813927 A | 16.03.2008 | US 2008055215 A1 | 06.03.2008 |
| | | US 7952547 B2 | 31.05.2011 |
| | | TWI 345748 B | 21.07.2011 |
| CN 101847376 A | 29.09.2010 | US 2010245326 A1 | 30.09.2010 |
| | | JP 2010231205 A | 14.10.2010 |
| | | KR 20100107422 A | 05.10.2010 |
| | | KR 20120031197 A | 30.03.2012 |
| | | KR 110054491 B | 03.07.2012 |
| CN 101202018 A | 18.06.2008 | None | |

Form PCT/ISA /210 (patent family annex) (July 2009)

## INTERNATIONAL SEARCH REPORT

International application No.

PCT/CN2012/086193

**A. CLASSIFICATION OF SUBJECT MATTER**

G09G 3/36 (2006.01) i

G09G 3/18 (2006.01) n

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210187110
- CN 1825415 A